# EUROPÄISCHE PATENTSCHRIFT

(11) **EP 4 501 865 B1**
(45) Veröffentlichungstag und Bekanntmachung des Hinweises auf die Patenterteilung: **08.04.2026**
(21) Anmeldenummer: 24191792.1
(22) Anmeldetag: 30.07.2024
(51) Int. Cl.: C02F 1/28, C02F 1/56, B01J 20/26, C02F 101/30, C02F 101/34, C02F 1/66, C02F 101/38, C02F 1/52

(54) **MITTEL ZUR TRENNUNG AUFZUBEREITENDER ABWÄSSER IN EINE SCHLAMM- UND EINE KLARWASSERPHASE SOWIE ZUR ADSORPTIVEN ENTFERNUNG VON SPURENSTOFFEN AUS DER KLARWASSERPHASE**
AGENT FOR SEPARATING EFFLUENT INTO A SLUDGE AND A CLARIFIED WATER PHASE AND FOR ADSORPTIVE REMOVAL OF TRACE SUBSTANCES FROM THE CLEAR WATER PHASE
AGENT POUR LA SÉPARATION DES EAUX USÉES À PRÉPARER EN PHASE LIQUIDE ET EAU CLAIRE ET POUR L'ÉLIMINATION ADSORPTIVE DES SUBSTANCES À L'ÉTAT DE TRACES DE LA PHASE EAU CLAIRE

(30) Priorität: 04.08.2023 AT 506292023
(43) Veröffentlichungstag der Anmeldung: 05.02.2025
(73) Patentinhaber: Kubinger, Ulrich, 4675 Weibern (AT)
(72) Erfinder: Kubinger, Ulrich, 4675 Weibern (AT)
(74) Vertreter: Hübscher & Partner Patentanwälte GmbH

(56) Entgegenhaltungen:
- CN-A- 106 745 351
- CN-A- 107 915 290
- CN-A- 108 409 056
- CN-A- 108 557 973
- US-A1- 2019 084 843

## Beschreibung

Die Erfindung bezieht sich auf ein Mittel zur Trennung aufzubereitender Abwässer in eine Schlamm- und eine Klarwasserphase sowie zur adsorptiven Entfernung von Spurenstoffen aus der Klarwasserphase, mit einem, beispielsweise in Lösungsform vorliegendem, Polymersystem als Flockungshilfsmittel, Kohlenstoff und wenigstens einer Erdalkali-Lösung, die Ca-Ionen und/oder Mg-Ionen umfasst.

Vor allem im Zusammenhang mit der Aufbereitung kommunaler und industrieller Abwässer versteht man unter dem Begriff "Spurenstoffe" im Wasser gelöste, unerwünschte Stoffe, die auch als Mikroschadstoffe bezeichnet werden. Derartige Spurenstoffe sind insbesondere synthetische Stoffe, die beispielsweise in Abwässern in Konzentrationen von Nano- bis zu mehreren Mikrogramm pro Liter Wasser vorhanden sind. Im Abwasser gelöste Spurenstoffe finden ihren Ursprung in der Regel in diversen Produkten, die in Haushalten, in öffentlichen Einrichtungen, in der Industrie und in der Landwirtschaft eingesetzt werden. Solche Produkte können beispielsweise Arzneimittel, Biozide bzw. Pflanzenschutzmittel, Wasch- und Reinigungsmittel, Kosmetika sowie Baustoffe sein. Aufgrund ihrer Persistenz und Anreicherung in biologischen Geweben bleiben sie im Wasserkreislauf langfristig erhalten und stellen daher nicht zuletzt für die Trinkwassergewinnung ein erhebliches Problem dar. Bedenklich sind insbesondere solche Stoffe, die aufgrund ihrer Toxizität bzw. bekannter biologischer Wirkungen die Gewässerqualität und die Gewässernutzung beeinflussen können. Zu den umweltrelevanten Spurenstoffen im Zusammenhang mit der Einleitung von Abwasser über Kläranlagen in einen Vorfluter bzw. im Zusammenhang mit der Ermittlung von Gewässergüteparametern zählen beispielsweise Benzotriazol, Diclofenac und Metoprolol. Diese sehr verbreiteten Spurenstoffe sowie etwaige damit im Zusammenhang stehende Metabolite können allerdings in konventionellen dreistufigen Kläranlagen nicht oder nur ungenügend aus dem Abwasser entfernt werden, wie dies anhand ihres regelmäßigen Nachweises in Gewässerproben gezeigt werden kann.

Um daher die nach der Reinigung in konventionellen Kläranlagen verbleibenden Spurenstoffe, welche gut wasserlöslich und biologisch schlecht abbaubar sind, wirksam aus dem Abwasser zu entfernen, kommen neben oxidativen oder größenselektiven Prozessen im Industriebereich vor allem Adsorptionsverfahren auf Basis adsorptiver Phasen zum Einsatz. Letzteres kann beispielsweise mithilfe von Aktivkohle in gekörnter Form (GAK) als Festbett erfolgen.

Bei den größenselektiven Prozessen ist insbesondere die druckgetriebene Membranfiltration von Bedeutung, die im Zuge einer Vollstrombehandlung erfolgt. Nachteilig ist daran, dass hohe Drücke von fast 70 bar notwendig sind. Bei der Aufbereitung kommunaler Abwässer in größeren Einzugsgebieten ist dies technisch jedoch nicht sinnvoll realisierbar, da die diesbezüglichen Abwassermengen pro Tag viel zu hoch sind, um eine Vollstrombehandlung durchzuführen. Hinzu kommen die damit verbundenen hohen Energie- und Investitionskosten, die um ein Vielfaches höher sind als jene einer konventionellen Abwasserreinigung, was somit den Einsatz derartiger Filtrationsverfahren im Zusammenhang mit kommunalen Abwässern unwirtschaftlich gestaltet.

Daneben wird beispielsweise Aktivkohle als Adsorbens eingesetzt, um das Abwasser von diversen Spurenstoffen etc. zu reinigen. Demgemäß sind entsprechende Mittel bekannt (CN109553175A, CN108557973A, US8021556B2), die neben einem Polymersystem als Flockungshilfsmittel, sowie Erdalkali-Lösungen auch Aktivkohlepartikel umfassen. Beim Einsatz derartiger pulverförmiger Aktivkohlepartikel (PAK) wird somit das Adsorbens gemeinsam mit dem durch die Spurenstoffe etc. gebildeten Adsorbat über die Schlammlinie entsorgt. Weitere relevante Dokumente sind CN 108 409 056 A, CN 107 915 290 A, US 2019/084843 A1 und CN 106 745 351 A. Nachteilig daran ist, dass beim Einsatz von PAK aufweisenden Mittel zur Abwasseraufbereitung in konventionellen Kläranlagen die Trennung in eine Schlamm- und eine Klarwasserphase des zu behandelnden Abwassers oftmals nur unzureichend erfolgt. Zudem können gewisse Bakterien in der Schlammphase oder ein unausgeglichenes Kalk-Kohlensäuregleichgewicht bzw. mangelnde Säurepufferkapazität des zu reinigenden Abwassers die Bildung von Schlammflocken in einer für eine effiziente Separation notwendigen Beschaffenheit erschweren. Dies führt insgesamt zu einem unerwünschten PAK-Schlupf von bis zu 30 % an der Gesamtmenge der eingesetzten PAK, was sich in einem Eintrag von schadstoffbeladener Aktivkohle in den Vorfluter bzw. in den Ablauf der Kläranlage niederschlägt. Dadurch können die vorgeschriebenen Grenzwerte von maximal 1 Milligramm schadstoffbeladener PAK pro Liter im Ablauf der Kläranlage beim Einsatz bekannter Mittel regelmäßig nicht eingehalten werden.

Es besteht somit ein Bedarf an einem Mittel der eingangs geschilderten Art, mit welchem beim Einsatz in der biologischen Abwasserbehandlung kommunaler Abwässer durch konventionelle Kläranlagen nicht nur eine zuverlässige Trennung des aufzubereitenden Abwassers in eine Schlamm- und eine Klarwasserphase, sondern auch eine wirksame Entfernung von Spurenstoffen aus der Klarwasserphase ermöglicht wird.

Die Erfindung löst die gestellte Aufgabe dadurch, dass der, insbesondere aus Aktivkohle, Ruß, Graphit, Graphen und / oder Fulleren ausgewählte, Kohlenstoff in polymer-oberflächenmodifizierter Form unter Ausbildung eines Polymer-Kohlenstoff-Komplexes vorliegt, und dass das Mittel wenigstens eine Alkohollösung sowie wenigstens eine Carbonsäurelösung als Suspensionsstabilisierung für den Polymer-Kohlenstoff-Komplex umfasst. Weitere vorteilhafte Ausgestaltungen des erfindungsgemäßen Mittels sind in den Unteransprüchen angegeben.

Es hat sich überraschenderweise gezeigt, dass aufgrund der polymerbasierten Oberflächenmodifikation bzw. der Ausbildung eines Polymer-Kohlenstoff-Komplexes einerseits das Adsorptionsvermögen nicht beeinträchtigt, sondern sogar verbessert wird, und andererseits eine verstärkte Inkorporation der adsorbierten Mikroschadstoffe in die Schlammphase erfolgt. Dabei wird in Zusammenwirkung mit der wenigstens einen Erdalkali-Lösung die Bildung scherstabiler, dichter Belebtschlammflocken mit einem mittleren Durchmesser von 150 bis 500 µm und einer verbesserten Sedimentationsgeschwindigkeit als Voraussetzung für eine effiziente Separation begünstigt. Als scherstabil werden dabei Flocken bezeichnet, die eine kinematische Viskosität von mehr als 1 cSt bzw. 10⁻⁶ m²*s⁻¹ nach Scherbeanspruchung aufweisen.

Die Oberflächenmodifikation des Kohlenstoffs erfolgt dadurch, dass infolge einer durch den/die Alkohol(e) und den/die Carbonsäure(n) bedingten Veresterung zunächst funktionellen Estergruppen an der Kohlenstoffoberfläche angebunden werden, die in weiterer Folge eine Anbindung des Polymers erlauben. Zu diesem Zweck kann der Kohlenstoff zunächst in einer Mischung aus einer Alkohol- und Carbonsäurelösung suspendiert werden, wonach die so gebildete Kohlenstoffsuspension mit einer Polymermatrix, die auch in Lösungsform vorliegen kann, zur Ausbildung der Oberflächenmodifikation des Kohlenstoffes, d.h. zur Ausbildung des Polymer-Kohlenstoff-Komplexes, vermischt wird. Grundsätzlich kann das dem Polymer-Kohlenstoff-Komplex zugrundeliegende Polymer ein von dem Polymer bzw. den Polymeren des Polymersystems verschiedenes Polymer sein. Vorzugsweise ist das dem Polymer-Kohlenstoff-Komplex zugrundeliegende Polymer jedoch ein Polymer des Polymersystems des erfindungsgemäßen Mittels. In diesem Fall ist es auch möglich, dass die Oberflächenmodifikation des Kohlenstoffs unmittelbar beim Anmischen des erfindungsgemäßen Mittels erfolgt. Die verwendeten Alkohole und Carbonsäuren stehen somit erfindungsgemäß zunächst für die chemische Synthese der oberflächenmodifizierten Kohlenstoffe zu einem Polymer-Kohlenstoff-Komplex zur Verfügung und dienen in weiterer Folge auch der Suspensionsstabilisierung im Zusammenhang mit dem einen erhöhten Anteil organischer Ladungsträger bereitstellenden Polymersystem. Auch eine mangelnde Säurepufferkapazität kann durch das Zusammenwirken der erfindungsgemäßen Komponenten ausgeglichen werden, was eine zuverlässige Trennung des Abwassers in eine Schlamm- und eine Klarwasserphase weiter begünstigt.

Es hat sich herausgestellt, dass höhere Mengen einer Alkohollösung von bis zu 10 Gew% die Oberflächenmodifikation des Kohlenstoffes weiter begünstigen.

Darüber hinaus kann die Oberflächenmodifikation des Kohlenstoffs weiter dadurch begünstigt werden, dass das Anmischen bzw. die Veresterung bei Temperaturen über 70 °C erfolgt, unter Einhaltung entsprechender Maximaltemperaturen.

Erfindungsgemäß umfasst das Polymersystem kationifizierte Stärke, Epichlorhydrindimethylamincopolymer, Polydiallyldimethylammoniumchlorid, Polyamin und/oder Polyacrylamid. Dies bedeutet, dass das Polymersystem insbesondere auch aus einer Mischung jener Polymere gebildet sein kann. Das Polymersystem kann insbesondere 10 - 50 Gew% am erfindungsgemäßen Mittel aufweisen.

Vorzugsweise weist die wenigstens eine Erdalkali-Lösung 5 - 30 Gew% am erfindungsgemäßen Mittel auf. Dies bedeutet, dass bei nur einer vorhandenen Erdalkali-Lösung diese 5 - 30 Gew% am Mittel aufweist, wohingegen bei mehreren vorhandenen Erdalkali-Lösungen diese in Summe 5 - 30 Gew% am Mittel aufweisen. Die wenigstens eine Erdalkali-Lösung ist insbesondere durch eine CaX-Lösung und / oder eine MgX-Lösung gebildet, wobei X ein Chlorid, ein Sulfat und / oder ein Nitrat ist. Besonders bevorzugt umfasst ein erfindungsgemäßes Mittel zwei Erdalkali-Lösungen, besonders bevorzugt eine Calciumchlorid-Lösung und eine Magnesiumchlorid-Lösung.

Vorzugsweise basiert die Alkohollösung auf ein- und / oder mehrwertigen Alkoholen, d.h. dass eine Mischung aus mehreren unterschiedlichen Alkoholen vorgesehen sein kann. Noch bevorzugter basiert die Alkohollösung auf entweder einem ein-, zwei-, oder dreiwertigen Alkohol. Besonders bevorzugt basiert die Alkohollösung auf einem einwertigen Alkohol, insbesondere auf Ethanol.

Vorzugsweise basiert die wenigstens eine Carbonsäurelösung auf Mono-, Di-, Tri- und / oder Hydroxycarbonsäuren. Demgemäß kann insbesondere auch eine Mischung aus verschiedenen Carbonsäurelösungen vorliegen. Dabei kann naturgemäß eine Mono-, Di-, oder Tricarbonsäure auch gleichzeitig eine Hydroxycarbonsäure sein, beispielsweise im Falle der Zitronensäure. Besonders bevorzugt weist die wenigstens eine Carbonsäurelösung 5 - 30 Gew% am erfindungsgemäßen Mittel auf, wobei bei mehreren vorhandenen Carbonsäurelösungen, analog zu obigen Ausführungen im Zusammenhang mit den Erdalkali-Lösungen, diese in Summe 5 - 30 Gew% am Mittel aufweisen.

Vorzugsweise umfasst ein erfindungsgemäßes Mittel 10 - 50 Gew% eines Polymersystems, 0,1 - 10 Gew% eines polymer-oberflächenmodifizierten Kohlenstoffs, 5 - 30 Gew% wenigstens einer 20 - 40 %igen Erdalkali-Lösung, 0,1 - 10 Gew % einer 60 - 80 %igen Alkohollösung, sowie 5 - 20 % wenigstens einer 0,2 - 80 %igen Carbonsäurelösung.

Noch bevorzugter umfasst ein erfindungsgemäßes Mittel 35 Gew% eines Polymersystems, davon 20 Gew% kationifizierte Stärke sowie 15 Gew% eines Polyamins, 5 Gew% eines Polyamin-oberflächenmodifizierten Kohlenstoffs, insbesondere einer Polyamin-oberflächenmodifizierten Aktivkohle, 15 Gew% einer 30 - 40 %igen MgX-Lösung sowie 15 Gew% einer 30 - 40 %igen CaX-Lösung, wobei X ein Chlorid, ein Sulfat und / oder ein Nitrat ist, 10 Gew% einer 70 %igen Ethanollösung, und 20 Gew% einer 50 %igen Zitronensäurelösung.

Ein erfindungsgemäßes Mittel kann dabei grundsätzlich noch weitere Komponenten enthalten. Vorzugsweise ist aber vorgesehen, dass ein erfindungsgemäßes Mittel ausschließlich aus einem Polymersystem, einem Polymer-Kohlenstoff-Komplex auf Basis eines polymer-oberflächenmodifizierten Kohlenstoffs, aus wenigstens einer Erdalkali-Lösung, aus wenigstens einer Alkohollösung und aus wenigstens einer Carbonsäurelösung besteht.

### Ausführungsbeispiele:

Ein erfindungsgemäßes Mittels zur Trennung aufzubereitender Abwässer in eine Schlamm- und eine Klarwasserphase sowie zur adsorptiven Entfernung von Spurenstoffen aus der Klarwasserphase umfasst 20 % kationifizierte Stärke, 15 % eines Polyamins, 15 % einer 30 %igen Calciumchloridlösung, 15 % einer 30 %igen Magnesiumchloridlösung, 20 % einer 50 %igen Zitronensäure, 5 % Polyamin-oberflächenmodifizierte Aktivkohle und 10 % einer 70 %igen Ethanollösung.

Gemäß einer weiteren Ausführungsform umfasst ein erfindungsgemäßes Mittel 10 % Epichlorhydrindimethylamincopolymer, 20 % eines Polyamins, 15 % einer 15 %igen Lösung kationifizierter Stärke, 20 % einer 33%igen Calciumchloridlösung, 10 % einer 30 %igen Magnesiumchloridlösung, 3 % einer 50%igen Milchsäurelösung, 2 % einer 0,2%igen Fumarsäurelösung, 10 % Polyamin-oberflächenmodifiziertes C₆₀ Fulleren und 10 % einer 70 %igen Ethanollösung.

### Versuchsergebnisse:

### Laborversuch

Es wurden im Laborversuch (n = 100) Abwasserproben mit unterschiedlichen Mitteln S1 bis S4 behandelt. Dabei bezieht sich S1 auf ein Mittel gemäß der EP2808306B1, wobei das Mittel aus 61 Gew% einer Polyaluminiumchlorid-Lösung mit 18 Gew% Al₂O₃, mit 20 Gew% einer 23%igen FeCl₂-Lösung, mit 3,5 Gew% einer 15%igen Lösung der kationifizierten Stärke, mit 15 Gew% einer 33%igen CaCl₂-Lösung und 0,5 Gew% einer gesättigten Ascorbinsäure-Lösung besteht. S2 bezieht sich auf ein Mittel gemäß der EP3636601B1, wobei das Mittel aus 40 Gew% einer 28%igen FeCl₂-Lösung, 8 Gew% einer 30%igen Ascorbinsäure-Lösung, 5 Gew% einer 40%igen CaCl₂-Lösung, 42 Gew% einer 36%igen Polyaluminiumchlorid-Lösung mit 18 Gew% Al₂O₃ sowie 5 Gew% einer Polyamin-Lösung mit einem Wirksubstanzgehalt von 85% besteht. S3 bezieht sich auf ein Mittel gemäß der EP3974394A1, wobei das Mittel aus 65 Gew% einer Polyaluminiumchlorid-Lösung mit 18 Gew% Al₂O₃ als Flockungsmittel, 10 Gew% einer 50%igen Epichlorhydrindimethylamin-copolymer-Lösung als Flockungshilfsmittel, 15 Gew% einer 30%igen MgCl₂-Lösung als Erdalkali-Lösung sowie 10 Gew% einer 70%igen Ethanol-Lösung besteht. S4 bezieht sich auf ein erfindungsgemäßes Mittel, welches aus 10 Gew% Epichlorhydrindimethylamin-copolymer, 20 Gew% eines Polyamins, 15 Gew% einer 15%igen Lösung kationifizierter Stärke, 20 Gew% einer 33%igen CaCl₂-Lösung, 10 Gew% einer MgCl₂-Lösung, 3 Gew% einer 50%igen Milchsäure-Lösung, 2 Gew% einer 0,2%igen Fumarsäure Lösung, 10 Gew% Polyamin-oberflächenmodifiziertes C₆₀ Fulleren und 10 Gew% einer 70%igen Ethanol-Lösung besteht.

Es wurde dabei die prozentuelle Entfernung von diversen Mikroschadstoffen aus der Abwasserprobe gemäß untenstehender Tabelle bestimmt. Es wurden jeweils 100 ppm der Mittel S1-S3 alleine oder jeweils in Kombination mit 15 ppm Aktivkohle (AK) getestet. Das Mittel S4 wurde ebenfalls mit 100 ppm dosiert. Dabei konnte bei S4 im Vergleich zu den anderen Mitteln S1 bis S3 eine verbesserte Entfernung (E) festgestellt werden:

| **Mikroschadstoff** | **Kategorie** | **S1** | **S1+AK** | **S2** | **S2+AK** | **S3** | **S3+AK** | **AK** | **S4** |
|---|---|---|---|---|---|---|---|---|---|
| | | **E** | **E** | **E** | **E** | **E** | **E** | **E** | **E** |
| | | **[%]** | **[%]** | **[%]** | **[%]** | **[%]** | **[%]** | **[%]** | **[%]** |
| Carbamazepin | Arzneimittel | 11 | 15 | 13 | 14 | 18 | 20 | 38 | 73 |
| Diclofenac | Arzneimittel | 5 | 34 | 7 | 9 | 15 | 17 | 34 | 67 |
| Metoprolol | Arzneitmittel | 16 | 26 | 21 | 34 | 13 | 19 | 49 | 97 |
| Ethinylestradiol | Estrogen | 3 | 8 | 10 | 15 | 20 | 33 | 38 | 72 |
| Estradiol | Estrogen | 4 | 19 | 7 | 8 | 15 | 24 | 31 | 68 |
| Carbendazim | Pestizid | 25 | 21 | 14 | 11 | 11 | 28 | 35 | 84 |
| Benzotriazol | Korrosionsschutz | 13 | 15 | 18 | 16 | 6 | 19 | 27 | 70 |

### Kläranlagenversuch

Darüber hinaus wurde ein erfindungsgemäßes Mittel in einer Kläranlage eingesetzt. Die Kläranlage weist eine Ausbaugröße bzw. einen Einwohnergleichwert (EWG) von 24.000 EWauf. Die Zulaufmenge betrug 4.460 m³ pro Tag. Der biochemische Sauerstoffbedarf (BSB_{5,Zu}) im Zulauf betrug 950 kg pro Tag. Der chemische Sauerstoffbedarf (CSB_{Zu}) im Zulauf betrug 1.574 kg pro Tag. Der gelöste organische Kohlenstoff (DOCzu) im Zulauf betrug 411 kg pro Tag.

Hierbei wurden die Konzentrationen C von diversen Mikroschadstoffen in Nanogramm pro Liter (ng/l) im Zu- und Ablauf der Kläranlage gemessen. Dabei wurde die Dosierung von 100 ppm des erfindungsgemäßen, gemäß obiger Zusammensetzung angegebenen Mittels S4 in einer eigenständigen Fließlinie (Index 1) durchgeführt, wohingegen parallel dazu in einer davon unterschiedlichen Fließlinie (Index 2) keine Dosierung durchgeführt wurde. Wie aus der Tabelle ersichtlich ist, konnten im Ablauf jener Fließlinie, in der eine Dosierung mit dem Mittel S4 durchgeführt wurde, verringerte Konzentrationen an Schadstoffen im Vergleich zur unbehandelten Fließlinie festgestellt werden.

| **Mikroschadstoff** | **Kategorie** | **C_{ZU,dM} [ng/L]** | **C_{Ab,dM,1} [ng/L]** | **C_{AB,dM,2} [ng/L]** |
|---|---|---|---|---|
| Carbamazepin | Arzneimittel | 502 | 69 | 432 |
| Diclofenac | Arzneimittel | 920 | 126 | 598 |
| Metoprolol | Arzneimittel | 261 | 3 | 149 |
| Ethinylestradiol | Estrogen | 25 | 1 | 6 |
| Estradiol | Estrogen | 53 | 2 | 8 |
| Carbendazim | Pestizid | 105 | 7 | 82 |
| Benzotriazol | Korrosionsschutz | 6.090 | 828 | 4.872 |

## Patentansprüche

1. Mittel zur Trennung aufzubereitender Abwässer in eine Schlamm- und eine Klarwasserphase sowie zur adsorptiven Entfernung von Spurenstoffen aus der Klarwasserphase, mit
a. einem Polymersystem als Flockungshilfsmittel,
b. Kohlenstoff und
c. wenigstens einer Erdalkali-Lösung, umfassend Ca-Ionen und/oder Mg-Ionen,
**dadurch gekennzeichnet, dass** der Kohlenstoff in polymer-oberflächenmodifizierter Form unter Ausbildung eines Polymer-Kohlenstoff-Komplexes vorliegt, und dass das Mittel wenigstens eine Alkohollösung sowie wenigstens eine Carbonsäurelösung als Suspensionsstabilisierung für den Polymer-Kohlenstoff-Komplex umfasst und dass der Polymer-Kohlenstoff-Komplex auf einer Oberflächenmodifikation des Kohlenstoffes durch wenigstens ein Polymer des Polymersystems basiert und dass das Polymersystem kationifizierte Stärke, Epichlorhydrindimethylamincopolymer, Polydiallyldimethylammoniumchlorid, Polyamin und/oder Polyacrylamid umfasst.

2. Mittel nach Anspruch 1, **dadurch gekennzeichnet, dass** der Kohlenstoff aus Aktivkohle, Ruß, Graphit, Graphen und / oder Fulleren ausgewählt ist.

3. Mittel nach Anspruch 1 oder 2, **dadurch gekennzeichnet, dass** die wenigstens eine Erdalkali-Lösung durch eine CaX-Lösung und / oder eine MgX-Lösung gebildet ist, wobei X ein Chlorid, ein Sulfat und / oder ein Nitrat ist.

4. Mittel nach einem der Ansprüche 1 bis 3, **dadurch gekennzeichnet, dass** die Alkohollösung auf ein- und / oder mehrwertigen Alkoholen, bevorzugt auf einem ein-, zwei-, oder dreiwertigen Alkohol, noch bevorzugter auf einem einwertigen Alkohol, besonders bevorzugt auf Ethanol basiert.

5. Mittel nach einem der Ansprüche 1 bis 4, **dadurch gekennzeichnet, dass** die wenigstens eine Carbonsäurelösung auf Mono-, Di-, Tri- und / oder Hydroxycarbonsäuren basiert.

6. Mittel nach einem der Ansprüche 1 bis 5, **dadurch gekennzeichnet, dass** es
a. 10 - 50 Gew% eines Polymersystems,
b. 0,1 - 10 Gew% eines polymer-oberflächenmodifizierten Kohlenstoffs,
c. 5 - 30 Gew% wenigstens einer 20 - 40 %igen Erdalkali-Lösung,
d. 0,1 - 10 Gew % einer 60 - 80 %igen Alkohollösung, sowie
e. 5 - 20 % wenigstens einer 0,2 - 80 %igen Carbonsäurelösung umfasst.

7. Mittel nach Anspruch 6, **dadurch gekennzeichnet, dass** es
a. 35 Gew% eines Polymersystems, davon 20 Gew% kationifizierte Stärke sowie 15 Gew% eines Polyamins,
b. 5 Gew% eines Polyamin-oberflächenmodifizierten Kohlenstoffs, insbesondere einer Polyamin-oberflächenmodifizierten Aktivkohle,
c. 15 Gew% einer 30 - 40 %igen MgX-Lösung sowie 15 Gew% einer 30 - 40 %igen CaX-Lösung, wobei X ein Chlorid, ein Sulfat und / oder ein Nitrat ist,
d. 10 Gew% einer 70 %igen Ethanollösung, sowie
e. 20 Gew% einer 50 %igen Zitronensäurelösung umfasst.

8. Mittel nach Anspruch 6, **dadurch gekennzeichnet, dass** es
a. 45 Gew% eines Polymersystems, davon 10 Gew% Epichlorhydrindimethylamincopolymer, 20 Gew% eines Polyamins und 15 Gew% kationifizierte Stärke,
b. 10 Gew% eines Polyamin-oberflächenmodifizierten Kohlenstoffs, insbesondere eines Polyamin-oberflächenmodifizierten C60 Fullerens,
c. 10 Gew% einer 30 %igen Magnesiumchlorid-Lösung sowie 15 - 20 Gew% einer 33 %igen Calciumchlorid-Lösung,
d. 10 Gew% einer 70 %igen Ethanollösung, sowie
e. 3 Gew% einer 50%igen Milchsäure und 2 Gew% einer 0,2%igen Fumarsäure umfasst.

## Claims

1. Agent for separating wastewater to be treated into a sludge phase and a clear water phase, and for the adsorptive removal of trace substances from the clear water phase, with
a. a polymer system as a flocculant,
b. carbon, and
c. at least one alkaline earth solution comprising Ca ions and/or Mg ions,
**characterized in that** the carbon is present in a polymer surface-modified form, forming a polymer-carbon complex, and that the agent comprises at least one alcohol solution and at least one carboxylic acid solution as suspension stabilizers for the polymer-carbon complex, and that the polymer-carbon complex is based on a surface modification of the carbon by at least one polymer of the polymer system, and that the polymer system comprises cationized starch, epichlorohydrin dimethylamine copolymer, polydiallyldimethylammonium chloride, polyamine, and/or polyacrylamide.

2. Agent according to claim 1, **characterized in that** the carbon is selected from activated carbon, carbon black, graphite, graphene, and/or fullerene.

3. Agent according to claim 1 or 2, **characterized in that** the at least one alkaline earth metal solution is formed by a CaX solution and/or an MgX solution, wherein X is a chloride, a sulfate, and/or a nitrate.

4. Agent according to one of claims 1 to 3, **characterized in that** the alcohol solution is based on monohydric and/or polyhydric alcohols, preferably on a monohydric, dihydric or trihydric alcohol, more preferably on a monohydric alcohol, and particularly preferably on ethanol.

5. Agent according to one of claims 1 to 4, **characterized in that** the at least one carboxylic acid solution is based on mono-, di-, tri- and/or hydroxycarboxylic acids.

6. Agent according to one of claims 1 to 5, **characterized in that** it
a. 10-50 wt% of a polymer system,
b. 0.1-10 wt% of a polymer-surface-modified carbon,
c. 5-30 wt% of at least one 20-40% alkaline earth metal solution,
d. 0.1-10 wt% of a 60-80% alcohol solution, and
e. 5-20% of at least one 0.2-80% carboxylic acid solution.

7. Agent according to claim 6, **characterized in that** it comprises
a. 35 wt% of a polymer system, of which 20 wt% is cationized starch and 15 wt% is a polyamine,
b. 5 wt% of a polyamine surface-modified carbon, in particular a polyamine surface-modified activated carbon,
c. 15 wt% of a 30-40% MgX solution and 15 wt% of a 30-40% CaX solution, wherein X is a chloride, a sulfate, and/or a nitrate,
d. 10 wt% of a 70% ethanol solution, and
e. 20 wt% of a 50% citric acid solution.

8. Agent according to claim 6, **characterized in that** it comprises
a. 45 wt% of a polymer system, of which 10 wt% is epichlorohydrin dimethylamine copolymer, 20 wt% is a polyamine, and 15 wt% is cationized starch,
b. 10 wt% of a polyamine surface-modified carbon, in particular a polyamine surface-modified C60 fullerene,
c. 10% by weight of a 30% magnesium chloride solution and 15-20% by weight of a 33% calcium chloride solution,
d. 10 wt% of a 70% ethanol solution, and
e. 3% by weight of a 50% lactic acid solution and 2% by weight of a 0.2% fumaric acid solution.

## Revendications

1. Agent pour la séparation des eaux usées à préparer en phase liquide et eau claire et pour l'élimination adsorptive des substances à l'état de traces de la phase eau claire, comprenant
a. un système polymère comme adjuvant de floculation,
b. du carbone et
c. au moins une solution alcalino-terreuse comprenant des ions Ca et/ou des ions Mg,
**caractérisé en ce que** le carbone se présente sous une forme modifiée en surface par un polymère avec formation d'un complexe polymère-carbone, et **en ce que** l'agent comprend au moins une solution d'alcool et au moins une solution d'acide carboxylique comme stabilisateur de suspension pour le complexe polymère-carbone, et **en ce que** le complexe polymère-carbone est basé sur une modification de surface du carbone par au moins un polymère du système polymère, et **en ce que** le système polymère comprend de l'amidon cationisé, un copolymère d'épichlorhydrine-diméthylamine, du chlorure de polydiallyldiméthylammonium, une polyamine et/ou du polyacrylamide.

2. Agent selon la revendication 1, **caractérisé en ce que** le carbone est choisi parmi le charbon actif, le noir de carbone, le graphite, le graphène et/ou le fullerène.

3. Agent selon la revendication 1 ou 2, **caractérisé en ce que** la au moins une solution alcalino-terreuse est formée par une solution de CaX et/ou une solution de MgX, X étant un chlorure, un sulfate et/ou un nitrate.

4. Agent selon l'une des revendications 1 à 3, **caractérisé en ce que** la solution d'alcool est à base d'alcools monovalents et/ou polyvalents, de préférence d'un alcool monovalent, di- ou trivalent, de préférence d'un alcool monovalent, plus particulièrement de préférence d'éthanol.

5. Agent selon l'une des revendications 1 à 4, **caractérisé en ce que** la au moins une solution d'acide carboxylique est à base d'acides mono-, di-, tri- et/ou hydroxycarboxyliques.

6. Agent selon l'une des revendications 1 à 5, **caractérisé en ce qu'**il contient
a. 10 à 50 % en poids d'un système polymère,
b. 0,1 à 10 % en poids d'un carbone à surface modifiée par un polymère,
c. 5 à 30 % en poids d'au moins une solution d'alcalino-terreux à 20-40 %,
d. 0,1 à 10 % en poids d'une solution d'alcool à 60-80 %, ainsi que
e. 5 à 20 % d'au moins une solution d'acide carboxylique à 0,2-80 %.

7. Agent selon la revendication 6, **caractérisé en ce qu'**il contient
a. 35 % en poids d'un système polymère, dont 20 % en poids d'amidon cationisé et 15 % en poids d'une polyamine,
b. 5 % en poids d'un carbone modifié en surface par une polyamine, en particulier un charbon actif modifié en surface par une polyamine,
c. 15 % en poids d'une solution de MgX à 30-40 % et 15 % en poids d'une solution de CaX à 20-30-40 %, X étant un chlorure, un sulfate et/ou un nitrate,
d. 10 % en poids d'une solution d'éthanol à 70 %, et
e. 20 % en poids d'une solution d'acide citrique à 50 %.

8. Agent selon la revendication 6, **caractérisé en ce qu'**il contient
a. 45 % en poids d'un système polymère, dont 10 % en poids d'un copolymère d'épichlorhydrine-diméthylamine, 20 % en poids d'une polyamine et 15 % en poids d'amidon cationisé,
b. 10 % en poids d'un carbone modifié en surface par une polyamine, en particulier un fullerène C60 30 modifié en surface par une polyamine,
c. 10 % en poids d'une solution de chlorure de magnésium à 30 % et 15 à 20 % en poids d'une solution de chlorure de calcium à 33 %,
d. 10 % en poids d'une solution d'éthanol à 70 %, ainsi que
e. 3 % en poids d'acide lactique à 50 % et 2 % en poids d'acide fumarique à 0,2 %.
